# NEUE EUROPÄISCHE PATENTSCHRIFT

(11) **EP 0 331 765 B2**
(45) Veröffentlichungstag und Bekanntmachung des Hinweises auf die Entscheidung über den Einspruch: **11.10.1995**
(45) Hinweis auf die Patenterteilung: 20.05.1992
(21) Anmeldenummer: 88103482.1
(22) Anmeldetag: 05.03.1988
(51) Int. Cl.: E04D 5/02, E04D 5/10, E04D 5/12, C09J 5/06, D06N 5/00

(54) **Verfahren zum Verlegen und Abdichten von Bitumen-Abdichtungsbahnen und Abdichtungsbahn zur Durchführung dieses Verfahrens**
Method for laying and sealing bituminous sealing membranes, and sealing membrane for carrying out this method
Procédé pour la pose et l'étanchement de membranes d'étanchéité et membrane d'étanchéité pour l'exécution de ce procédé

(43) Veröffentlichungstag der Anmeldung: 13.09.1989
(73) Patentinhaber: Paul Bauder GmbH & Co., D-70499 Stuttgart (DE)
(72) Erfinder: Bauder, Gerhard, D-7000 Stuttgart 31 (DE); Mauk, Hanns-Jörg, Dr., D-7121 Mundelsheim (DE); Katz, Ursula, D-7016 Gerlingen (DE); Dipper, Michael, D-7000 Stuttgart 30 (DE)
(74) Vertreter: Hoeger, Stellrecht & Partner

(56) Entgegenhaltungen:
- DE-A- 3 307 502
- FR-A- 2 571 766
- GB-A- 1 310 941
- US-A- 4 253 898
- US-A- 4 276 093
- Bautenschutz, Chemie und Technologie; E. Gundermann, Seiten 287-289

## Beschreibung

Die Erfindung betrifft ein Verfahren zum Verlegen und Abdichten von Bitumen-Abdichtungsbahnen auf Dächern oder dergleichen, bei dem man das Bitumen der Abdichtungsbahn erwärmt und die Abdichtungsbahn an die Unterlage andrückt und dabei anklebt oder verschweißt.

Es ist bekannt, Bitumen-Abdichtungsbahnen mit Hilfe von heißflüssiger Bitumen-Klebemasse oder durch direktes Erwärmen mit offener Flamme (Flämmverfahren) miteinander zu verkleben. Der Umgang mit etwa 200°C heißem Bitumen sowie mit offener Flamme kann dabei gefährlich sein.

Es sind in letzter Zeit Bitumen-Abdichtungsbahnen entwikkelt worden, die an der Unterseite selbstklebend ausgebildet sind. Diese sogenannten Kalt-Selbstklebebahnen haben jedoch den Nachteil, daß ihre Selbstklebekraft sehr stark abhängig ist von der Umgebungstemperatur bei der Verarbeitung, von der Staubfreiheit des Untergrundes sowie von eventuell anwesender Feuchtigkeit auf dem Untergrund.

Es ist Aufgabe der Erfindung, ein Verfahren der gattungsgemäßen Art derart zu verbessern, daß die für die Verklebung notwendige Erweichung der Bitumen-Abdichtungsbahn in ungefährlicher Weise erreicht werden kann, wobei trotzdem die Sicherheit der Verklebung gegenüber Kaltselbstklebeschichten verbessert wird.

Diese Aufgabe wird bei einem Verfahren der eingangs beschriebenen Art erfindungsgemäß dadurch gelöst, daß man in das Bitumen der Abdichtungsbahn durch Mikrowellenstrahlung erwärmbare Partikel einbettet und die Abdichtungsbahn durch Beaufschlagung mit Mikrowellenstrahlung in dem Bereich selektiv erwärmt, in den die Partikel eingebettet sind, so daß das Bitumen in dem erwärmten Bereich die für die Abdichtung notwendige Erweichung erfährt.

Es ist dabei außerordentlich vorteilhaft, daß eine Erwärmung nur in dem Bereich erfolgt, in dem die durch die Mikrowellen erwärmbaren Partikel eingebettet sind, so daß es möglich ist, durch gezielte Verteilung der eingebetteten Partikel auch zu bestimmen, in welchem Bereich die Bitumen-Abdichtungsbahn erwärmt wird bzw. kalt bleibt. So ist es beispielsweise möglich, daß Bitumen im Bereich des normalerweise eingebetteten Stützgerüstes unerwärmt zu lassen, so daß in diesem Bereich keine Stabilitätseinbußen auftreten, während in dem Bereich, in dem die Verklebung erfolgt, also vorzugsweise an der Unterseite oder bei Mehrlagigkeit auch an der Oberseite der Bitumen-Abdichtungsbahn, eine selektive Erwärmung und damit eine Erzielung der notwendigen Klebrigkeit nur in den gewünschten Bereichen möglich werden.

Die DE-PS 33 07 502 beschreibt zwar bereits ein Verfahren zum Verkleben von Teppichböden und anderen Bodenbelägen, bei dem an der Unterseite dieser Bodenbeläge ein bei Raumtemperatur trockener Klebstoff aufgebracht wird, der mittels Mikrowellenanregung erwärmt und dadurch klebefähig gemacht werden kann. Es handelt sich dabei aber um eine separat auf den Bodenbelag aufgebrachte Kleberschicht, und das beschriebene Verfahren ist auch ausdrücklich nur für das Verkleben von Teppichböden, Linoleum etc., also von Bodenbelägen mit dem Bodem bestimmt. Es ist überraschend, daß ein solches Verfahren auch bei Bitumen-Abdichtungsbahnen, die eine vollständig andere Zusammensetzung haben, verwendbar ist, wobei im Unterschied zu dem bekannten Verfahren nicht ein separater Klebstoff klebrig gemacht wird sondern die die Abdichtungsbahn selbst bildende Bitumenmasse. Nicht durch das schichtweise Auftragen einer durch Mikrowellen erwärmbaren Substanz sondern durch das Einbetten partikelförmiger Teilchen in die Bitumenmasse wird es möglich, eine gleichmäßige Erwärmung der Bitumenmasse nicht nur unmittelbar an der Oberfläche sondern auch über eine bestimmte Tiefe der Bitumen-Abdichtungsbahn zu erreichen, wobei durch die Einbettung zusätzlich die Möglichkeit gegeben wird,die Eindringtiefe der Erwärmung und auch die Verteilung der Temperatur im Innern der Bitumenbahn durch unterschiedliche Konzentration der Einbettung zu steuern. Daführ fehlen in der DE-PS 33 07 502 alle Anregungen.

Ein besonderer Vorteil dieses Verfahrens liegt darin, daß man die Abdichtungsbahn vor dem Verkleben bereits in die endgültige Position auf die Unterlage auflegen kann, ohne daß dabei eine Verklebung oder Verschweißung erfolgt, d. h. das Auflegen wird gegenüber dem herkömmlichen Verfahren, bei dem unmittelbar während des Auflegens auch noch verklebt bzw. verschweißt werden muß, wesentlich erleichtert, da die Verbindung mit der darunterliegenden Schicht bei dem neuen Verfahren erst erfolgt, wenn die Abdichtungsbahn bereits ausgelegt ist.

Bei einem besonders vorteilhaften Ausführungsbeispiel der Erfindung ist vorgesehen, daß man in das Bitumen Kohlenstoffpartikel einbettet, und zwar in einem Anteil von 0,01 bis etwa 30 Gewichtsprozent. Es ist dabei außerordentlich überraschend, daß durch die Einbettung von Kohlenstoffpartikeln in Bitumen eine Erwärmbarkeit durch Mikrowellenstrahlung ermöglicht wird. Wahrscheinlich liegt dies daran, daß an der Oberfläche der an sich nicht polaren Kohlenstoffpartikel polare Gruppen angelagert werden, die im Mikrowellenfeld eine Anregung erfahren und somit die Kohlenstoffpartikel und ihre Umgebung erwärmen. Die Einbettung der Kohlenstoffpartikel hat zusätzlich den Vorteil, daß in dem Einbettungsbereich durch die Kohlenstoffpartikel eine gegenüber dem Bitumen wesentlich verbesserte Wärmeleitung auftritt, so daß die Erwärmung in dem Einbettungsbereich gleichmäßig auf die Bitumenmasse verteilt wird. Wenn die Kohlenstoffpartikel nur in einer dünnen Schicht in die Bitumen-Abdichtbahn eingebettet werden, führt dies dazu, daß innerhalb der Schicht eine gute Wärmeleitfähigkeit gegeben ist, während senkrecht dazu die Wärmeleitfähigkeit durch die relativ schlechte Wärmeleitfähigkeit des Bitumens bestimmt wird. Durch die Mikrowellenanregung erzeugte Wärme wird daher innerhalb der Einbettungsschicht gleichmäßig verteilt, während die angrenzende Bitumenschicht nur sehr geringfügig erwärmt wird, also ihre Stabilität in vollem Umfange beibehält.

Die Kohlenstoffpartikel können in Form von Ruß, Graphit oder Kohlestaub verwendet werden. Als besonders geeignet hat sich die Verwendung von Kohlenstoffasern herausgestellt, die wahrscheinlich in besonderer Weise geeignet sind, polare Gruppen anzulagern. Diese Kohlefasern haben zusätzlich einen stützenden und verstärkenden Effekt und verbessern dadurch die Formstabilität der Bitumen-Abdichtungsbahn während des Verlegungsvorganges, bei dem die erwärmte Bitumenmasse weich und formstabil ist.

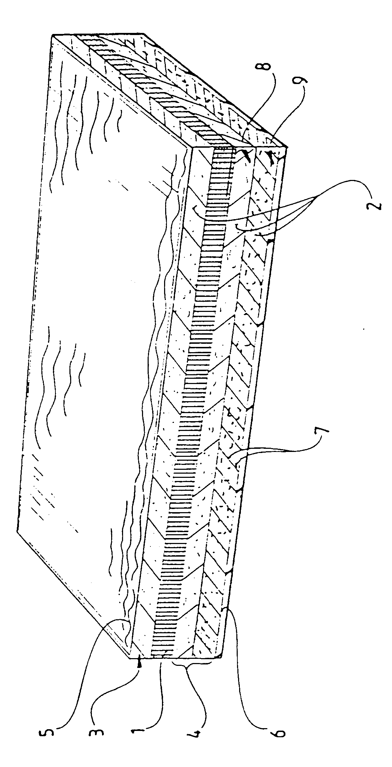

Die nachstehende Beschreibung bevorzugter Ausführungsformen der Erfindung dient im Zusammenhang mit der Zeichnung der näheren Erläuterung. Die Zeichnung zeigt einen Ausschnitt aus einer Bitumen-Abdichtungsbahn mit einem Einbettungsbereich für mikrowellenaktivierbare Partikel.

Die in der Zeichnung ausschnittsweise dargestellte Bitumen-Abdichtungsbahn umfaßt eine vlies- oder gewebeartige Stützeinlage 1, die beidseitig in Bitumen 2 eingebettet ist, so daß sich oberhalb der Einlage 1 eine obere Bitumenschicht 3 und unterhalb der Einlage 1 eine untere Bitumenschicht 4 ausbilden. Die obere Bitumenschicht 3 kann an der Oberseite mit einer Abstreuung 5 aus Sand oder dergleichen versehen sein, während die untere Bitumenschicht 4 üblicherweise eine abziehbare Schutzfolie 6 trägt.

In dem dargestellten Ausführungsbeispiel ist die untere Bitumenschicht 4 dicker ausgebildet als die obere Bitumenschicht 3. In den an die Unterseite anschließenden Teil der unteren Bitumenschicht 4 sind erfindungsgemäß Partikel 7 eingebettet, insbesondere Kohlenstoffpartikel, die in Form von Ruß, Graphit oder Kohlenstaub vorliegen oder vorzugsweise in Form von Kohlefasern. Die Teilchengröße der Kohlenstoffpartikel liegt in der Größenordnung von 10 Nanometern bis 800 Mikrometern.

Bei den Kohlefasern hat es sich als günstig herausgestellt, Kohlefasern zu verwenden, deren Länge zwischen 0,2 Millimetern und 6 Millimetern liegt, während der Durchmesser eine Größenordnung von 1 bis 50 Mikrometer haben kann. Die Einbettung erfolgt dabei in einer Menge zwischen 0,01 und 30 Gewichtsprozent bezogen auf das Bitumen. Die Kohlenstoffpartikel können in der gesamten unteren Bitumenschicht 4 homogen eingebettet sein, es ist aber auch möglich, wie dies in der Zeichnung angedeutet ist, die untere Bitumenschicht 4 in einen oberen Teil 8 und einen unteren Teil 9 zu unterteilen, wobei Kohlepartikel nur in den unteren Teil 9 eingebettet werden.

Kohlepartikel können auch in die obere Bitumenschicht 3 eingebettet sein; dies ist insbesondere dann von Vorteil, wenn die Bitumen-Abdichtungsbahn zur Herstellung mehrlagiger Abdichtungen verwendet wird, d.h. wenn auf die Bitumen-Abdichtungsbahn eine weitere Bitumen-Abdichtungsbahn aufgeklebt werden soll. In anderen Fällen genügt es, wenn eine Einbettung von Kohlenstoffpartikeln in die untere Bitumenschicht 4 erfolgt.

Die Einbettung kann im Einbettungsbereich homogen erfolgen, es ist aber auch möglich, die Konzentration der eingebetteten Partikel von der Außenseite der Bitumen-Abdichtungsbahn in das Innere der Bahn hinein kontinuierlich oder stufenförmig abnehmen zu lassen.

Eine derartige Bitumen-Abdichtungsbahn wird nach dem Abziehen der Schutzfolie 6 auf die abzudichtende Unterlage aufgelegt, wobei es besonders vorteilhaft ist, wenn durch eine zusätzliche Kaltselbstklebeschicht an der Unterseite der Abdichtungsbahn eine vorläufige Fixierung erreicht wird.

Nach dem Auflegen wird die Abdichtungsbahn mit Mikrowellenenergie beaufschlagt, beispielsweise durch ein fahrbares, mit Walzen kombiniertes Mikrowellengerät, das über die Oberseite der Abdichtungsbahn gefahren wird. Die Mikrowellenstrahlung durchdringt die Dachbahn und wird nur in dem Bereich der Abdichtungsbahn absorbiert, in dem sich Kohlenstoffpartikel befinden, so daß auch nur in dem Bereich eine Erwärmung auftritt. Diese Erwärmung kann so dosiert werden, daß beispielsweise Temperaturen zwischen 40° C und 80° C erreicht werden, also gegenüber der Verklebung mit Bitumen-Heißklebemasse oder mit dem bekannten Flämmverfahren relativ niedrige Temperaturen. Diese Temperaturen reichen aber aus, um eine einwandfreie Verklebung mit der Unterlage zu erreichen.

Bei dem dargestellten Ausführungsbeispiel ist die Abdichtungsbahn an der Unterseite mit einer abziehbaren Schutzfolie 6 versehen. Es ist nicht unbedingt notwendig, daß die Abdichtungsbahn eine solche Schutzfolie 6 trägt. Bei anderen Ausführungsformen ist die Abdichtungsbahn an der Unterseite mit einer mineralischen Abstreuung bedeckt, beispielsweise aus Sand oder Talkum. Bei der Erwärmung der Bitumenmasse mittels Mikrowellenstrahlung wird die Bitumenmasse so stark erweicht, daß sie im Bereich der Abdeckung fließt und die Abstreuungspartikel allseits umschließt und einbettet und außerdem eine innige Verbindung mit der darunterliegenden Unterlage eingeht, die ihrerseits eine weitere Bitumen-Abdichtungsbahn, mit Betondach oder dergleichen sein kann. Die Abstreuungspartikel werden dabei im Verbindungsbereich in die Bitumenmasse eingeschlossen.

Es ist dabei äußerst vorteilhaft, daß die Erwärmung im Volumen der Abdichtungsbahn selbst auftritt, so daß eine innige Verbindung der Unterlage mit der Bitumenbahn selbst erreicht werden kann, ohne daß eine die Haftung vermittelnde Klebeschicht dazwischen angeordnet ist. Dies ist besonders vorteilhaft, wenn mehrere derartige Bitumen-Abdichtungsbahnen miteinander verklebt werden oder im Naht- und Stoßbereich benachbarter Bahnen, da dann die Bitumenmasse beider Bahnen ineinanderfließen kann und eine praktisch einstückige Verbindung herstellt.

Durch die aufgrund der eingebetteten Partikel erhöhte Flächenwärmeleitfähigkeit wird nicht nur der Verlegevorgang beschleunigt, sondern es wird auch sichergestellt, daß alle Bereiche an der Klebefläche gleichmäßig erwärmt werden, so daß insgesamt eine wesentliche Erhöhung der Verklebeschicht erreicht werden kann.

Nachstehend werden einige Beispiele für die Zusammensetzung von Bitumenmassen angegeben, die durch Mikrowellenstrahlung erwärmbar und erweichbar sind und daher in der angegebenen Weise in Bitumen-Abdichtungsbahnen Verwendung finden können:

### Beispiel 1:

| | Gewichtsprozent |
|---|---|
| Oxidationsbitumen 100/40 | 85 % |
| Schiefermehl | 10 % |
| Ruß | 5 % |

Eine Menge dieser Masse in der Größenordnung von ca. 150 g wird bei einer Mikrowellenleistung von 600 Watt in 2 Minuten von einer Temperatur von 20° C auf eine Temperatur von 100° C erwärmt.

### Beispiel 2:

| | Gewichtsprozent |
|---|---|
| Destillationsbitumen B 200 | 63,5 % |
| SBS Kautschuk | 10,5 % |
| Kohlenwasserstoffharz | 4,9 % |
| Kalksteinmehl | 20 % |
| Antioxidans | 1 % |
| Kohlefasern | 0,1 % |

Eine Menge von ca. 150 g dieser Zusammensetzung wird bei einer Mikrowellenleistung von 600 Watt in zwei Minuten von einer Temperatur von 20° C auf eine Temperatur von etwa 100° C erwärmt.

### Beispiel 3:

| | Gewichtsprozent |
|---|---|
| Destillationsbitumen B 200 | 58,6 % |
| SBS Kautschuk | 10,5 % |
| Kohlenwasserstoffharz | 4,9 % |
| Kalksteinmehl | 20 % |
| Antioxidans | 1 % |
| Ruß | 5 % |

Eine Menge von ca. 150 g dieser Zusammensetzung wird bei einer Mikrowellenleistung von 600 Watt in zwei Minuten von einer Temperatur von 20° C auf eine Temperatur von etwa 100° C erwärmt.

### Vergleichsbeispiel:

| | Gewichtsprozent |
|---|---|
| Destillationsbitumen B 200 | 63,6 % |
| SBS Kautschuk | 10,5 % |
| Kohlenwasserstoffharz | 4,9 % |
| Kalksteinmehl | 20 % |
| Antioxidans | 1 % |

Eine Menge von ca. 150 g dieser Zusammensetzung wird bei einer Mikrowellenleistung von 600 Watt in zwei Minuten von einer Temperatur von 20° C auf eine Temperatur von etwa 27° C erwärmt.

Dieses Beispiel zeigt deutlich, daß ohne den Kohlezusatz nur eine unbedeutende Erwärmung der Bitumenmasse eintritt, die in keiner Weise ausreichend wäre, um eine Verklebung oder gar Verschweißung zu erreichen. Erst durch den Kohlezusatz wird die starke Erwärmung der Bitumenmasse ermöglicht.

## Patentansprüche

1. Verfahren zum Verlegen und Abdichten von Bitumen-Abdichtungsbahnen auf Dächern oder dergleichen, bei dem man das Bitumen der Abdichtungsbahn erwärmt und die Abdichtungsbahn an die Unterlage andrückt und dabei anklebt oder verschweißt, dadurch gekennzeichnet, daß man in das Bitumen der Abdichtungsbahn durch Mikrowellenstrahlung erwärmbare Partikel einbettet und die Abdichtungsbahn durch Beaufschlagung mit Mikrowellenstrahlung in dem Bereich selektiv erwärmt, in den die Partikel eingebettet sind, so daß das Bitumen in dem erwärmten Bereich die für die Abdichtung notwendige Erweichung erfährt.

2. Verfahren nach Anspruch 1, dadurch gekennzeichnet, daß man die Partikel in eine an die Unterseite der Abdichtungsbahn angrenzende Schicht einbettet.

3. Verfahren nach Anspruch 1 oder 2, dadurch gekennzeichnet, daß man die Partikel in eine an die Oberseite der Abdichtungsbahn angrenzende Schicht einbettet.

4. Verfahren nach einem der voranstehenden Ansprüche, dadurch gekennzeichnet, daß man in das Bitumen 0,01 bis 30 Gewichtsprozent Kohlenstoffpartikel einbettet.

5. Verfahren nach Anspruch 4, dadurch gekennzeichnet, daß man die Kohlenstoffpartikel in Form von Ruß, Graphit, Kohlestaub oder Kohlefasern einbettet.

## Claims

1. Method for laying and sealing bituminous sealing webs on roofs or the like, in which the bitumen of the sealing web is heated and the sealing web is pressed against the base layer and thereby bonded or welded, characterized in that particles heatable by microwave radiation are embedded in the bitumen of the sealing web and the sealing web is heated selectively in that region in which the particles are embedded by impingement with microwave radiation so that the bitumen in the heated region is softened as required for sealing.

2. Method as defined in claim 1, characterized in that the particles are embedded in a layer adjoining the underside of the sealing web.

3. Method as defined in claim 1 or 2, characterized in that the particles are embedded in a layer adjoining the upper side of the sealing web.

4. Method as defined in any of the preceding claims, characterized in that carbon particles in an amount of 0.01 to 30 % by weight are embedded in the bitumen.

5. Method as defined in claim 4, characterized in that the carbon particles are embedded in the form of carbon black, graphite, carbon dust or carbon fibers.

## Revendications

1. Procédé pour la pose et l'étanchement de membranes d'étanchéité en bitume sur des toits ou analogues, selon lequel on chauffe le bitume de la membrane d'étanchéité et on applique par compression la membrane d'étanchéité sur la base en la collant ou la soudant, caractérisé en ce que l'on incorpore dans le bitume de la membrane d'étanchéité des particules susceptibles d'être chauffées par un rayonnement hyperfréquence et l'on chauffe sélectivement la membrane d'étanchéité en la soumettant à un rayonnement hyperfréquence dans le domaine dans lequel sont incorporées les particules, de sorte que le bitume subit dans le domaine chauffé le ramollissement nécessaire pour l'étanchéité.

2. Procédé selon la revendication 1, caractérisé en ce que l'on incorpore les particules dans une couche voisine du côté inférieur de la membrane d'étanchéité.

3. Procédé selon la revendication 1 ou 2, caractérisé en ce que l'on incorpore les particules dans une couche voisine du côté supérieur de la membrane d'étanchéité.

4. Procédé selon l'une des revendications précédentes, caractérisé en ce que l'on incorpore dans le bitume 0,01 à 30 % en poids de particules de carbone.

5. Procédé selon la revendication 4, caractérisé en ce que l'on incorpore les particules de carbone sous forme de noir de carbone, de graphite, de poudre de charbon ou de fibres de charbon.
